# DEMANDE DE BREVET EUROPEEN

(11) **EP 2 660 092 A1**
(43) Date de publication de la demande: **06.11.2013**
(21) Numéro de dépôt: 13166232.2
(22) Date de dépôt: 02.05.2013
(51) Int. Cl.: B60K 37/02, G01D 13/26

(54) **Dispositif d'affichage, notamment pour véhicule automobile, et procédé de montage d'un appareil indicateur à aiguille pour un dispositif d'affichage**

(30) Priorité: 03.05.2012 FR 1201297
(71) Demandeur: Johnson Controls Automotive Electronics SAS, 95892 Cergy-Pontoise Cedex (FR)
(72) Inventeur: Box, Benoit, 95290 L'Isle Adam (FR)
(74) Mandataire: Schwöbel, Thilo K.

(57) **Abrégé**

La présente invention concerne un dispositif d'affichage (100), notamment pour véhicule automobile, et un procédé de montage d'une aiguille (120) pour un dispositif d'affichage, le dispositif d'affichage comprenant une surface d'affichage (11) et un appareil indicateur à aiguille (20), la surface d'affichage ayant une face avant dirigée vers un utilisateur et une face arrière, l'appareil indicateur à aiguille étant susceptible d'être entraîné en rotation autour d'un axe de rotation, l'appareil indicateur à aiguille comprenant une première partie (21) et une deuxième partie (22), la première partie étant prévue à la face arrière de la surface d'affichage, la deuxième partie étant prévue à la face avant, la surface d'affichage comprenant un évidement (112) en forme d'un arc de cercle autour de l'axe de rotation de l'appareil indicateur à aiguille, la première partie et la deuxième partie de l'appareil indicateur à aiguille étant prévues en deux pièces enfichés à l'aide d'un premier élément de fixation de la première partie de l'appareil indicateur à aiguille, et d'un deuxième élément de fixation de la deuxième partie de l'appareil indicateur à aiguille.

## Description

La présente invention concerne un dispositif d'affichage, notamment pour véhicule automobile, et un procédé de montage d'un appareil indicateur à aiguille pour un dispositif d'affichage.

Des dispositifs d'affichage sont connus, notamment avec des aiguilles pour afficher par exemple la valeur d'une vitesse ou d'une vitesse de rotation. Il est aussi connu de prévoir une aiguille sur la face arrière d'une surface d'affichage d'un dispositif d'affichage. Les documents EP 0 785 416 B1 et US 2010/0284164 A1 décrit un tel dispositif d'affichage ayant une aiguille derrière une surface d'affichage, notamment pour afficher un repérage de valeur de consigne sur un cadran.

De telles aiguilles cachées requièrent normalement un évidement dans la surface d'affichage du tableau de bord tel que la partie de l'appareil indicateur à aiguille qui se trouve du côté dirigé vers l'utilisateur de la surface d'affichage puisse passer soit à travers le support de la surface d'affichage (lorsque la surface d'affichage comprend un évidement en forme arc en cercle), soit autour du bord périphérique de la surface d'affichage.

Par ailleurs, de telles aiguilles cachées comprennent normalement un guide de lumière pour transporter la lumière d'une source de lumière vers l'endroit où l'information à afficher doit être affichée. Dans la pratique, des fuites de lumière sont fréquentes ce qui diminue la luminosité à l'endroit où l'information doit être affichée et ce qui augmente le besoin en puissance requis de la source de lumière.

Un inconvénient de tels dispositifs, selon l'art connu, consiste dans le fait que l'assemblage - notamment lorsque la surface d'affichage comprend un évidement en forme d'arc en cercle - du tableau de bord ou du dispositif d'affichage est compliqué et qu'il y a trop de fuites de lumière.

La présente invention a notamment pour but de palier aux inconvénients de l'art connu, et notamment ceux cités ci-dessus, et a également pour but de proposer un dispositif d'affichage comprenant une aiguille qui est plus facile à assembler, plus résistante et plus performante.

Suivant la présente invention, ce but est atteint par un dispositif d'affichage, notamment pour véhicule automobile, comprenant une surface d'affichage et un appareil indicateur à aiguille, la surface d'affichage ayant une face avant dirigée vers un utilisateur et une face arrière, l'appareil indicateur à aiguille étant susceptible d'être entraîné en rotation autour d'un axe de rotation, l'appareil indicateur à aiguille comprenant une première partie et une deuxième partie, la première partie étant prévue à la face arrière de la surface d'affichage, la deuxième partie étant prévue à la face avant, la surface d'affichage comprenant un évidement en forme d'un arc de cercle autour de l'axe de rotation de l'appareil indicateur à aiguille, la première partie et la deuxième partie de l'appareil indicateur à aiguille étant prévues en deux pièces enfichés à l'aide d'un premier élément de fixation de la première partie de l'appareil indicateur à aiguille, et d'un deuxième élément de fixation de la deuxième partie de l'appareil indicateur à aiguille.

De par une telle réalisation d'un dispositif d'affichage, il est avantageusement possible de faciliter l'aspect ésthétique du tableau de bord ou du dispositif d'affichage, car il peut éviter d'avoir le besoin d'un évidement dans la surface d'affichage tel que l'évidement soit suffisamment grand pour permettre de passer la deuxième partie de l'appareil indicateur à aiguille de la face arrière de la surface d'affichage vers la face avant de la surface d'affichage.

Un perfectionnement particulièrement préféré de l'invention réside dans le fait que la première partie de l'appareil indicateur à aiguille comprend une diode électroluminescente.

De par une telle réalisation d'un dispositif d'affichage, il est avantageusement possible de minimiser les fuites de lumière associées avec l'appareil indicateur à appareil indicateur à aiguille, notamment avec la première partie de l'appareil indicateur à aiguille.

Il est encore plus préféré selon la présente invention que la diode électroluminescente se trouve éloigné de l'axe de rotation de l'appareil indicateur à aiguille, c'est à dire près de l'endroit où la première partie et la deuxième partie de l'appareil indicateur à aiguille sont attachées l'une à l'autre.

De par une telle réalisation d'un dispositif d'affichage, il est avantageusement possible de minimiser encore plus les fuites de lumière associées avec l'appareil indicateur à aiguille, notamment avec la première partie de l'appareil indicateur à aiguille.

Un perfectionnement particulièrement préféré de l'invention réside dans le fait que la deuxième partie de l'appareil indicateur à aiguille comprend un guide de lumière.

De par une telle réalisation du dispositif d'affichage, il est possible de réaliser la deuxième partie de manière très légère et néanmoins de réaliser une grande protection contre les fuites de lumière.

Un autre perfectionnement préféré de l'invention réside dans le fait que la deuxième partie de l'appareil indicateur à aiguille comprend un curseur d'aiguille.

Par ailleurs, la présente invention concerne également un procédé de montage d'un appareil indicateur à aiguille pour un dispositif d'affichage, selon l'une quelconque des revendications précédentes, **caractérisé en ce que** le procédé de montage comprend les étapes suivantes :
- une première étape pendant laquelle la première partie de l'appareil indicateur à aiguille est assemblée avec la surface d'affichage,
- une deuxième étape pendant laquelle la deuxième partie de l'appareil indicateur à aiguille est assemblée avec la première partie de l'appareil indicateur à aiguille.

De par une telle réalisation, le procédé de montage peut être effectué d'une manière simple et efficace.

Un autre perfectionnement préféré du procédé de montage d'un appareil indicateur à aiguille pour un dispositif d'affichage réside dans le fait que la deuxième étape comprend la fixation mécanique entre la première partie et la deuxième partie de l'appareil indicateur à aiguille, notamment par l'intermédiaire d'une fixation à clip.

D'autres caractéristiques et avantages de l'invention ressortiront de la lecture de la description qui suit d'un mode de réalisation particulier non limitatif de la présente invention.

### BREVE DESCRIPTION DES DESSINS

L'invention sera mieux comprise grâce à la description ci-après, qui se rapporte à des modes de réalisation préférés, donnés à titre d'exemple non limitatifs et expliqués avec références aux dessins schématiques annexés, dans lesquels :
la figure 1 est une vue schématique de section d'un dispositif d'affichage selon l'état de la technique,
la figure 2 sont des vues schématiques de perspective d'un appareil indicateur à aiguille selon la présente invention, et
la figure 3 sont des vues schématiques des étapes du procédé de montage de l'appareil indicateur à aiguille et du dispositif d'affichage selon la présente invention.

### DESCRIPTION DES DESSINS

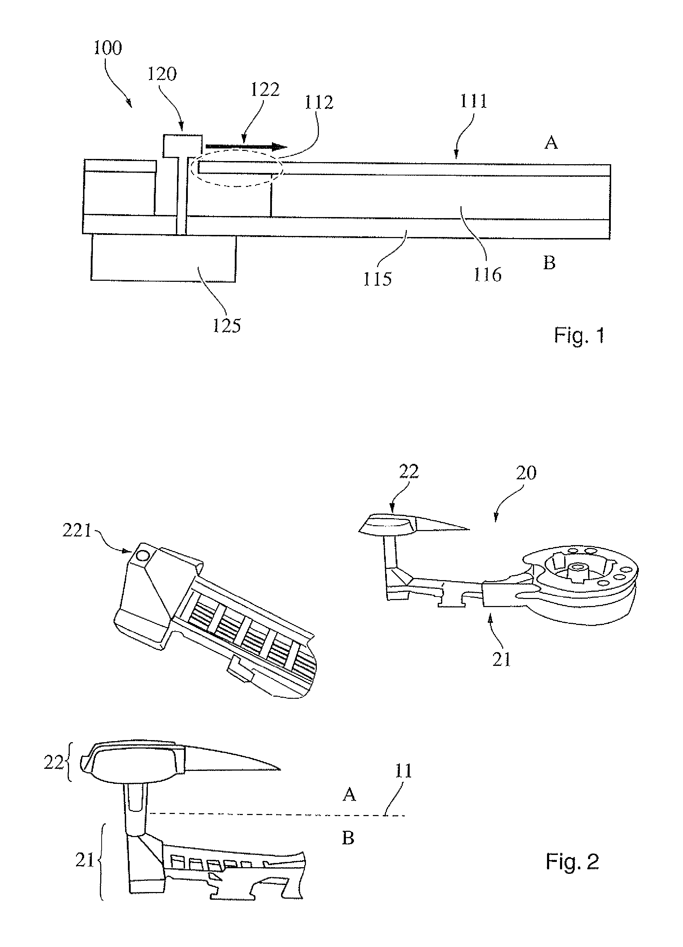

La figure 1 du dessin annexé montre une vue schématique de section d'un dispositif d'affichage 100 selon l'état de la technique dans son état assemblé. L'appareil indicateur à aiguille 120 est prévu en une seule pièce. La surface d'affichage 111 doit être prévue telle que la partie de l'appareil indicateur à aiguille 120 qui est visible par un utilisateur du dispositif d'affichage passe à travers le plan de la surface d'affichage 111. La surface d'affichage 111 doit alors être prévu avec un évidement 112 suffisamment grand pour - au moins avec un certain positionnement de l'appareil indicateur à aiguille, notamment un certain positionnement rotatif autour de l'axe de rotation de l'appareil indicateur à aiguille - permettre le passage de la partie visible 122 de l'appareil indicateur à aiguille 120. Par ailleurs le positionnment déterminé de l'appareil indicateur à aiguille 120 est une contrainte au niveau du processus d'assemblage du tableau de bord. La figure 1 montre par ailleursune carte imprimée 115 ainsi qu'un guide de lumière 116 et un moteur 125 pour entrainer l'appareil indicateur à aiguille 120. Une face avant A est visible pour un utilisateur et une face B est cachée.

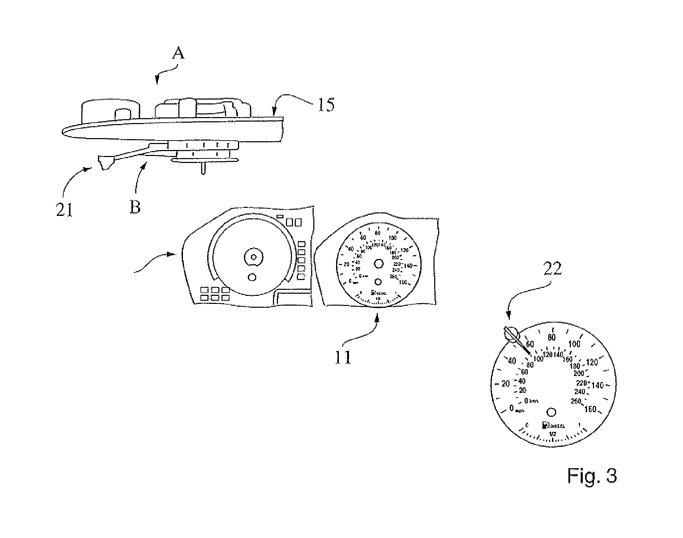

L'appareil indicateur à aiguille et le dispositif d'affichage selon la présente invention évitent ou au moins réduisent de tels difficultes. Ceci est représente dans les figures 2 et 3.

La figure 2 montre des vues schématiques de perspective d'un appareil indicateur à aiguille 20 selon la présente invention, et la figure 3 montre des vues schématiques des étapes du procédé de montage de l'appareil indicateur à aiguille 20 et du dispositif d'affichage 10 selon la présente invention.

Selon la présente invention, le dispositif d'affichage 10 comprend une surface d'affichage 11 et un appareil indicateur à aiguille 20. La surface d'affichage comprend une face arrière B et une face avant A. La surface d'affichage 11 comprend par ailleurs un évidement en forme d'un arc de cercle autour de l'axe de rotation de l'appareil indicateur à aiguille 20. L'appareil indicateur à aiguille 20 comprend une première partie 21 et une deuxième partie 22. La première partie 21 est prévue à la face arrière B de la surface d'affichage 11, et la deuxième partie 22 est prévue à la face avant A. La première partie 21 et la deuxième partie 22 de l'appareil indicateur à aiguille 20 sont prévues en deux pièces enfichés à l'aide d'un premier élément de fixation de la première partie 21 de l'appareil indicateur à aiguille 20, et d'un deuxième élément de fixation de la deuxième partie 22 de l'appareil indicateur à aiguille 20.

Les premier et deuxième éléments de fixation sont de préférence des éléments de fixation ayant un fonctionnement à clip.

Selon la présente invention, le dispositif d'affichage 10 comprend la surface d'affichage 11 notamment en forme de cadran. L'appareil indicateur à aiguille 20 affiche notamment une information d'aide, et notamment la valeur d'une vitesse souhaitée ou la valeur d'une limite de vitesse à observer ou la valeur d'une vitesse de rotation. Selon la présente invention, un autre appareil indicateur à aiguille (qui n'est pas montré dans les figures) peut être prévu pour l'affichage d'une autre information sur la surface d'affichage 11 du dispositif d'affichage 10. Un tel autre appareil indicateur à aiguille est de préférence positionné à la face avant A de la surface d'affichage 11.

La figure 2 montre l'appareil indicateur à aiguille 20 avec sa première partie 21 et sa deuxième partie 22. La représentation en haut à gauche dans la figure 2 montre la région radialement éloignée 221 de l'axe de rotation de la première partie 21 de l'appareil indicateur à aiguille 20 lorsque la deuxième partie 22 n'est pas assemblée avec la première partie 21. Dans l'exemple représenté dans la figure 2, une diode électroluminescente est positionné dans cette région radialement éloignée de l'axe de rotation de la première partie 21 de l'appareil indicateur à aiguille 20 pour permettre de réduire des fuites de lumière. Ainsi, il est possible de réaliser l'illumination de l'appareil indicateur à aiguille 20 par l'intermédiaire notamment d'une seule diode électroluminescente.

La représentation à droite de la figure 2 montre l'appareil indicateur à aiguille 20 avec sa première partie 21 et sa deuxième partie 22 fixée l'une sur l'autre.

Le montage de l'appareil indicateur à aiguille 20 peut être effectuée d'une manière simple et efficace en assemblant la première partie 21 de l'appareil indicateur à aiguille 20 relative à la surface d'affichage 11, c'est à dire en réalité relative à un support en forme de guide de lumière de la surface d'affichage 11, et en assemblant ensuite la deuxième partie 22 de l'appareil indicateur à aiguille 20 avec la première partie 21, la deuxième partie étant enfichée à l'aide d'éléments de fixation avec la première partie 21.

Le procédé de montage selon la présente invention comprend alors une première étape, pendant laquelle la première partie 21 de l'appareil indicateur à aiguille 20 est assemblée avec la surface d'affichage 11, et une deuxième étape, pendant laquelle la deuxième partie 22 de l'appareil indicateur à aiguille 20 est assemblée avec la première partie 21 de l'appareil indicateur à aiguille 20. Dans la figure 3, la représentation en haut à gauche montre le montage de l'appareil indicateur à aiguille 20 relatif à une carte imprimée 15. La représentation au milieu montre le montage de la surface d'affichage 11 avec la carte imprimée 15. Ces deux représentations correspondent donc à la première étape selon le procédé de montage selon la présente invention. La représentation en bas à droite de la figure 3 montre l'étape de montage de la deuxième partie 22 de l'appareil indicateur à aiguille 20, et donc la deuxième étape du procédé de montage selon l'invention.

## Revendications

1. Dispositif d'affichage (10), notamment pour véhicule automobile, comprenant une surface d'affichage (11) et un appareil indicateur à aiguille (20), la surface d'affichage (11) ayant une face avant (A) dirigée vers un utilisateur et une face arrière (B), l'appareil indicateur à aiguille (20) étant susceptible d'être entraîné en rotation autour d'un axe de rotation, l'appareil indicateur à aiguille (20) comprenant une première partie (21) et une deuxième partie (22), la première partie (21) étant prévue à la face arrière (B) de la surface d'affichage (11), la deuxième partie (22) étant prévue à la face avant (A), la surface d'affichage (11) comprenant un évidement en forme d'un arc de cercle autour de l'axe de rotation de l'appareil indicateur à aiguille (20), **caractérisé en ce que** la première partie (21) et la deuxième partie (22) de l'appareil indicateur à aiguille (20) sont prévues en deux pièces enfichés à l'aide d'un premier élément de fixation de la première partie (21) de l'appareil indicateur à aiguille (20), et d'un deuxième élément de fixation de la deuxième partie (22) de l'appareil indicateur à aiguille (20).

2. Dispositif d'affichage (10) selon la revendication 1, **caractérisé en ce que** la première partie (22) de l'appareil indicateur à aiguille (20) comprend une diode électroluminescente.

3. Dispositif d'affichage (10) selon l'une quelconque des revendications précédentes, **caractérisé en ce que** la deuxième partie (22) de l'appareil indicateur à aiguille (20) comprend un guide de lumière (25).

4. Dispositif d'affichage (10) selon l'une quelconque des revendications précédentes, **caractérisé en ce que** la deuxième partie (22) de l'appareil indicateur à aiguille (20) comprend un curseur d'aiguille.

5. Procédé de montage d'un appareil indicateur à aiguille (20) pour un dispositif d'affichage (10), selon l'une quelconque des revendications précédentes, **caractérisé en ce que** le procédé de montage comprend les étapes suivantes :
- - une première étape pendant laquelle la première partie (21) de l'appareil indicateur à aiguille (20) est assemblée avec la surface d'affichage (11),
- - une deuxième étape pendant laquelle la deuxième partie (22) de l'appareil indicateur à aiguille (20) est assemblée avec la première partie (21) de l'appareil indicateur à aiguille (20).

6. Procédé de montage selon la revendication 5, **caractérisé en ce que** la deuxième étape comprend la fixation mécanique entre la première partie (21) et la deuxième partie (22) de l'appareil indicateur à aiguille (20).
